# EUROPÄISCHE PATENTSCHRIFT

(11) **EP 0 943 541 B1**
(45) Veröffentlichungstag und Bekanntmachung des Hinweises auf die Patenterteilung: **26.03.2003**
(21) Anmeldenummer: 99101949.8
(22) Anmeldetag: 30.01.1999
(51) Int. Cl.: B64D 3/02, B64D 7/00

(54) **Startvorrichtung für einen geschleppten Flugkörper**
Launcher device for a towed flying body
Lanceur pour corps volant remorqué

(30) Priorität: 20.03.1998 DE 19812330
(43) Veröffentlichungstag der Anmeldung: 22.09.1999
(73) Patentinhaber: DORNIER GmbH, 88039 Friedrichshafen (DE)
(72) Erfinder: Weimer, Peter, 88677 Markdorf (DE); Sock, Rudolf, 88682 Salem/Beuren (DE)
(74) Vertreter: Meel, Thomas

(56) Entgegenhaltungen:
- FR-A- 2 324 568
- US-A- 3 049 319
- US-A- 4 195 798

## Beschreibung

Die Erfindung betrifft eine Startvorrichtung für ein Luftfahrzeug zum Schleppen eines Flugkörpers. Derartige Schleppkörper werden z.B. als Täuschkörper für den Selbstschutz eines Flugzeugs oder als Zielkörper für Schießübungen eingesetzt.

In der US 2,860,845 ist eine gattungsgemäße Startvorrichtung für einen geschleppten Flugkörper an einem Luftfahrzeug beschrieben. Sie umfasst
- einem luftfahrzeugfesten Strukturrahmen,
- einem Schleppkörperhaltesattel, an dem der geschleppte Flugkörper durch die Wirkung der Zugkräfte der Schleppleine gehalten werden kann,
- mindestens einem Schwenkhebel, über die der Schleppkörperhaltesattel mit dem Strukturrahmen schwenkbar verbunden ist, wobei der Schleppkörperhaltesattel derart verschwenkbar ist, daß er zusammen mit dem geschleppten Flugkörper aus einer ersten, luftfahrzeugnahen Position in eine hierzu parallele, luftfahrzeugferne Position und zurück bewegbar ist, und die luftfahrzeugferne Position gegenüber der luftfahrzeugnahen Position - bezogen auf die Luftfahrzeugachsen - nach hinten und unten versetzt ist.

Mittels eines Arbeitszylinders kann der Schleppkörperhaltesattel aus der luftfahrzeugnahen in die luftfahrzeugferne Position gebracht und dort gehalten werden.

Aufgabe der Erfindung ist es, eine Startvorrichtung für einen geschleppten Flugkörper an einem Luftfahrzeug zu schaffen, die folgende Anforderungen erfüllt:
- maximale Freigängigkeit des Schleppseils zum Höhenleitwerk des Luftfahrzeugs;
- der Schleppkörper sollte sich in möglichst ungestörter Luftströmung, d.h. unbeinflußt von der Strömung des Luftfahrzeugs, befinden;
- möglichst robuster, betriebssicherer Aufbau.

Diese Aufgabe wird mit dem Gegenstand des Patentanspruchs 1 gelöst. Vorteilhafte Ausführungen der Erfindung sind Gegenstand von Unteransprüchen.

Die erfindungsgemäße Startvorrichtung weist folgende Merkmale auf:
- einem luftfahrzeugfesten Strukturrahmen;
- einem Schleppkörperhaltesattel, an dem der geschleppte Flugkörper durch die Wirkung der Zugkräfte der Schleppleine gehalten werden kann;
- mindestens einen Schwenkhebel, über den der Schleppkörperhaltesattel mit dem Strukturrahmen schwenkbar verbunden ist, wobei der Schleppkörperhaltesattel derart verschwenkbar ist, daß er zusammen mit dem geschleppten Flugkörper aus einer ersten, luftfahrzeugnahen Position in eine hierzu parallele, luftfahrzeugferne Position und zurück bewegbar ist, und die luftfahrzeugferne Position gegenüber der luftfahrzeugnahen Position - bezogen auf die Luftfahrzeugachsen - nach hinten und unten versetzt ist, wobei
- der Schleppkörperhaltesattel durch den anliegenden Staudruck in der luftfahrzeugfernen Position gehalten werden kann.
In einer vorteilhaften Ausführung wird die Starteinheit in einem am Flugzeug angebrachten Behälter angeordnet, so daß sich nur bei ausgeschwenktem Schleppkörperhaltesattel (luftfahrzeugferne Position) eine Luftwiderstandserhöhung ergibt.

Die Erfindung wird anhand von Fig. näher erläutert. Es zeigen:
- Fig. 1: ein Luftfahrzeug mit erfindungsgemäßer Startvorrichtung sowie ausgelassenem Schleppkörper;
- Fig. 2: eine erfindungsgemäße Startvorrichtung in Seitenansicht;
- Fig. 3: zwei erfindungsgemäße Startvorrichtungen, die in einem am Luftfahrzeug angeordneten Behälter angeordnet sind, von hinten betrachtet;
- Fig. 4: zwei erfindungsgemäße Startvorrichtungen, die in einem am Luftfahrzeug angeordneten Behälter angeordnet sind, in Daraufsicht.

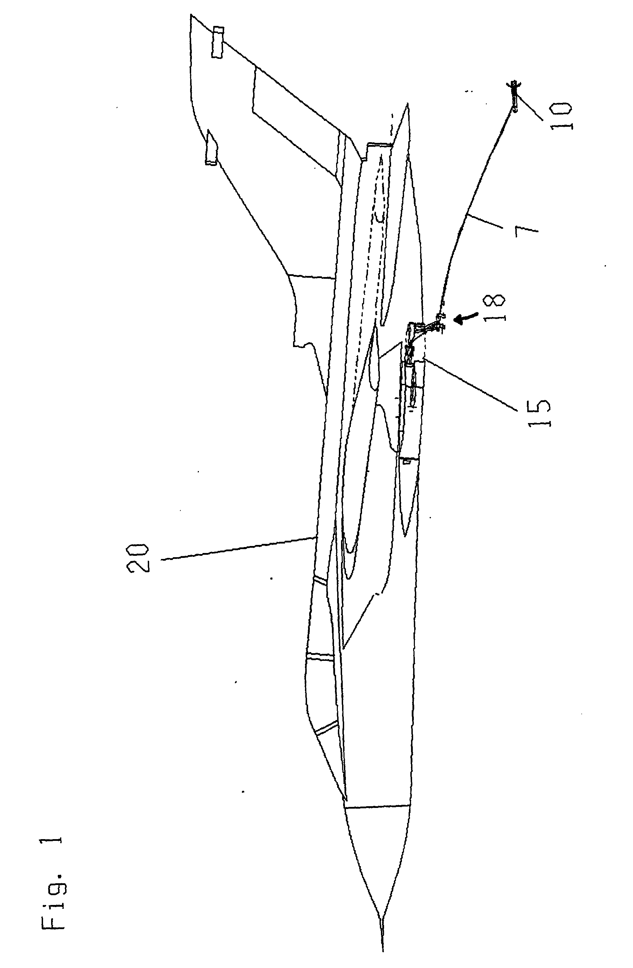

Fig. 1 zeigt ein Luftfahrzeug 20 mit einer erfindungsgemäßen Startvorrichtung 18. Die Starvorrichtung 18 ist hier in einem am Luftfahrzeug 20 angebrachten Außenlastbehälter 15 angeordnet. Die Startvorrichtung befindet sich im ausgeschwenkten Zustand. Der Schleppkörper 10, der hier als Täuschkörper eingesetzt wird, wird mittels einer Schleppleine 7 hinter dem Luftfahrzeug hergezogen.

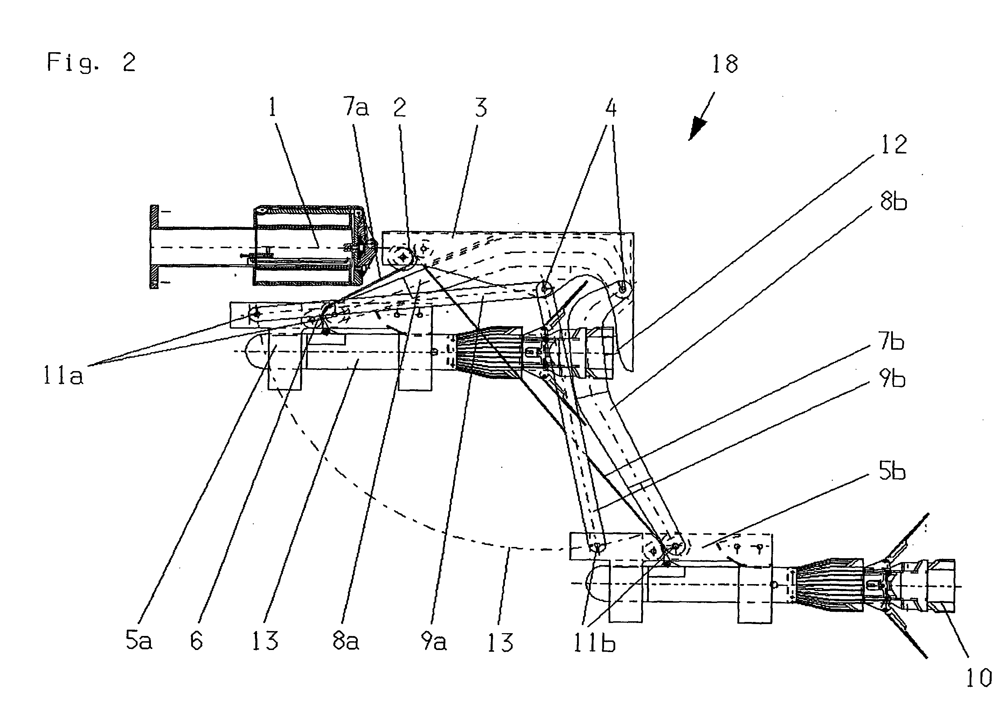

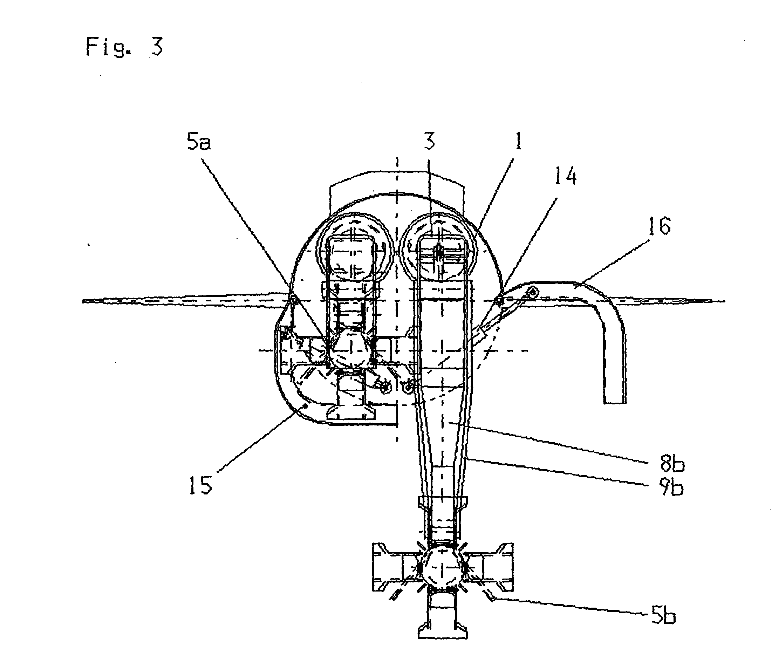

Fig. 2 zeigt die beispielhafte Ausführung einer erfindungsgemäßen Startvorrichtung 18. Die mit dem Zusatz a bezeichneten Bauteile bezeichnen dabei jeweils den eingeschwenkten Zustand (luftfahrzeugnahe Position), die mit Zusatz b bezeichneten Bauteile bezeichnen den ausgeschwenkten Zustand (luftfahrzeugferne Position). Die gesamte Starteinheit ist mit Hilfe eines oben geschlossenen, U-förmigen Strukturrahmens 3 im Luftfahrzeug-Außenlastbehälter 15 verschraubt. Oben links im Strukturrahmen 3 befindet sich die obere Seilumlenkeinheit 2, über die die Schleppleinenwinde 1 mit dem Schleppkörper 10 verbunden ist. Unterhalb des Strukturrahmens 3 befindet sich der Schleppkörperhaltesattel 5a, der über zwei parallel laufende Schwenkhebel 8a,9a mit dem Strukturrahmen 3 an den Lagerpunkten 4 verbunden ist. Die Länge eines Schwenkhebels liegt bei typischen Ausführungen im Bereich von ca. 40 - 80 cm. Die Lagerpunkte der Schwenkhebel 8a, 9a am Schleppkörpersattel 5a sind mit 11a bezeichnet. Die mechanischen Kräfte werden vorwiegend vom sowohl im Strukturrahmen 3 wie auch im Schleppkörpersattel 5 innen gelagerten hinteren Schwenkhebel 8a übernommen. Aus diesem Grund ist dieser Hebel als geschlossener Torsions- und Biegeträger ausgeführt. Der vorne, außenliegende Schwenkhebel 9a dient nur zur parallelen Ausrichtung des Schleppkörpersattels 5a. Der Schlepptäuschkörper 10 wird über eine oben angebrachte Schleppleine 7a und der unteren Seilumlenkeinheit 6 im Schleppkörpersattel 5 gehalten. Wird nun nach Öffnen der Klappe 16 des Außenlastbehälters 15 (Fig. 3) die Schleppleinenwinde 1 abgespult, fällt der Schleppkörpersattel 5 mit dem Schleppkörper 10 durch die Schwerkraft nach unten in die Luftströmung. Die gestrichelte Linie 13 stellt beispielhaft die Bewegung eines der Lager 11a dar. Über den anliegenden Staudruck wird dann die gesamte Einheit in die hintere Anschlagposition 12 gedrückt. In dieser luftfahrzeugfemen Position befindet sich somit die Schleppleine in Position 7b, der Schleppkörpersattel 5, an dem der Schleppkörper 10 nach wie vor angedockt ist, in Position 5b sowie die Schwenkhebel in Position 8b und 9b. Wird nun die Schle ppleine 7b weiter abgespult, so trennt sich der Schleppkörper 10 ohne weiteres vom Schleppkörpersattel und kann in nahezu ungestörter Strömung auf seine Endposition hinter dem Luftfahrzeug ausgelassen werden. Während des Schleppfluges können die Behälterklappen 16 geschlossen werden. In den Klappen sind hierzu entsprechende Aussparungen (nicht eingezeichnet) für die Schwenkhebel 8b,9b eingearbeitet. Wird der Schleppkörper 10 wieder eingezogen, erfolgen die beschri ebenen Vorgänge in umgekehrter Reihenfolge. Die Startvorrichtung kann nach dem Wiederandocken des Schleppkörpers 10 am Schleppkörpersattel 5 ohne weiteres über die Schleppleine 7 in die Außenlastbehälters 15 eingezogen werden. Danach kann die Klappe 16 des Außenlastbehälters geschlossen werden. Zum Öffnen und Schließen der Klappe 16 kann ein Stellantrieb 14, z.B. pneumatisch oder elektrisch betrieben, eingesetzt werden.

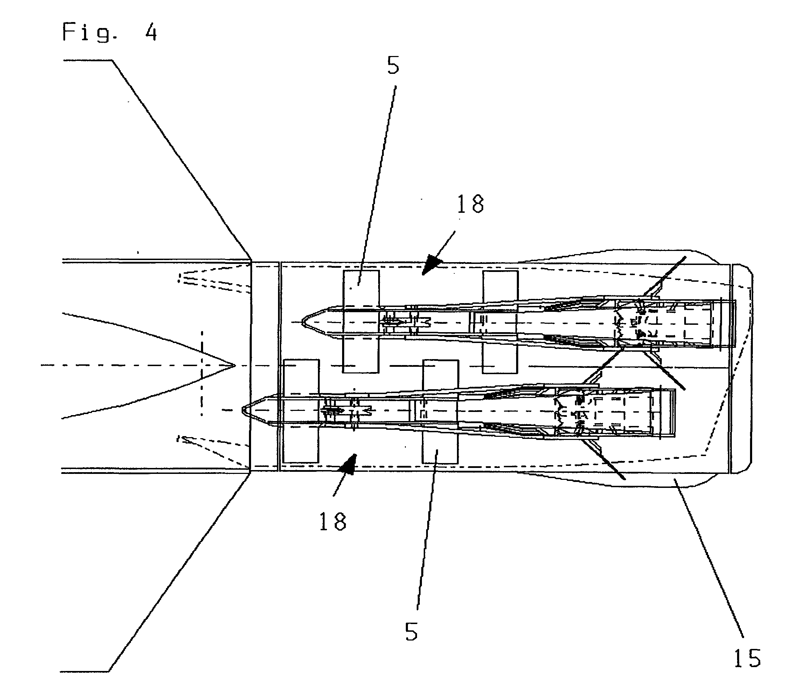

Fig. 4 zeigt eine Draufsicht auf die in dem Außenlastbehälter 15 angeordneten Startvorrichtungen 18 entsprechend Fig. 3. Die Anordnung von zwei Startvorrichtu n-gen in demselben Behälter ist vor allem aus Redundanzgründen vorteilhaft. Durch den ineinandergeschachtelten Einbau, der durch einen Versatz in axialer Richtung erreicht wird, erhält man eine sehr platzsparende Anordnung. Voraussetzung ist allerdings ein nahezu senkrechtes Absenken der jeweils zum Einsatz kommenden Startvorrichtung auf der anfänglichen Wegstrecke, so daß der seitlich ausladende Schleppkörpersattel 5 von der zweiten Startvorrichtung freikommt. Dies kann mit der erfindungsgemäßen Startvorrichtung erreicht werden.

## Patentansprüche

1. Startvorrichtung (18) für einen von einem Luftfahrzeug geschleppten Flugkörper mit
- einem Strukturrahmen (3) zum Befestigung am Luftfahrzeug,
- einem Schleppkörperhaltesattel (5,5a,5b), an dem der geschleppte Flugkörper (10) durch die Wirkung der Zugkräfte der Schleppleine (7,7a,7b) gehalten werden kann,
- mindestens einem Schwenkhebel (8a,8b,9a,9b), über die der Schleppkörperhaltesattel (5,5a,5b) mit dem Strukturrahmen (3) schwenkbar verbunden ist, wobei der Schleppkörperhaltesattel (5,5a,5b) derart verschwenkbar ist, daß er im eingebauten Zustand zusammen mit dem geschleppten Flugkörper (10) aus einer ersten, luftfahrzeugnahen Position in eine hierzu parallele, luftfahrzeugferne Position und zurück bewegbar ist, und die luftfahrzeugferne Position gegenüber der luftfahrzeugnahen Position - bezogen auf die Luftfahrzeugachsen - nach hinten und unten versetzt ist,
**dadurch gekennzeichnet, daß** der Schleppkörperhaltesattel (5,5a,5b) nur durch den anliegenden Staudruck in der luftfahrzeugfernen Position gehalten wird.

2. Startvorrichtung nach Anspruch 1, **dadurch gekennzeichnet, daß** durch Einziehen der Schleppleine (7,7a,7b) der Schleppkörperhaltesattel (5,5a,5b) zusammen mit dem geschleppten Flugkörper (10) aus der luftfahrzeugfernen in die luftfahrzeugnahe Position bewegt werden kann.

3. Startvorrichtung nach einem der vorangehenden Ansprüche, **dadurch gekennzeichnet, daß** genau zwei, parallel verlaufende Schwenkhebel (8a,8b,9a,9b), zwischen Schleppkörperhaltesattel (5,5a,5b) und Strukturrahmen (3) vorhanden sind, wobei einer zur Aufnahme der mechanischen Kräfte dient und der andere zur parallelen Ausrichtung des Schleppkörperhaltesattels (5,5a,5b) dient.

4. Startvorrichtung nach einem der vorangehenden Ansprüche, **dadurch gekennzeichnet, daß** sich die luftfahrzeugnahe Position innerhalb und die flugzeugferne Position außerhalb eines am Luftfahrzeugs (20) angebrachten Behälters (15) befindet.

## Claims

1. Launch apparatus (18) for an airborne vehicle which is towed by an aircraft having
- a structure frame (3) for attachment to the aircraft
- a towed body holding saddle (5, 5a, 5b) on which the towed airborne vehicle (10) can be held by the effect of the tension forces in the towing cable (7, 7a, 7b),
- at least one pivoting lever (8a, 8b, 9a, 9b), via which the towed body holding saddle (5, 5a, 5b) is connected to the structure frame (3) such that it can pivot, with the towed body holding saddle (5, 5a, 5b) being capable of pivoting such that, when it is installed, it can be moved together with the towed airborne vehicle (10) from a first position close to the aircraft to a position which is parallel thereto but is away from the aircraft, and back, and the position which is away from the aircraft is offset backwards and downwards with respect to the position close to the aircraft - with respect to the aircraft axes,
**characterized in that** the towed body holding saddle (5, 5a, 5b) is held in the position away from the aircraft only by the ram-air pressure that is applied.

2. Launch apparatus according to Claim 1, **characterized in that** the towed body holding saddle (5, 5a, 5b) can be moved together with the towed airborne vehicle (10) from the position away from the aircraft to the position close to the aircraft by drawing in the towing cable (7, 7a, 7b).

3. Launch apparatus according to one of the preceding claims, **characterized in that** just two parallel-running pivoting levers (8a, 8b, 9a, 9b) are provided between the towed body holding saddle (5, 5a, 5b) and the structure frame (3), with one being used to absorb the mechanical forces and the other being used for parallel alignment of the towed body holding saddle (5, 5a, 5b).

4. Launch apparatus according to one of the preceding claims, **characterized in that** the position close to the aircraft is located within a container (15) which is fitted to the aircraft (20), and the position away from the aircraft is located outside the container (15) which is fitted to the aircraft (20).

## Revendications

1. Lanceur (18) pour un corps volant remorqué par un aéronef, avec
- un cadre de structure (3) pour la fixation à l'aéronef,
- une selle de support du corps remorqué (5, 5a, 5b), sur laquelle le corps volant remorqué (10) peut être maintenu par l'action des forces de traction des câbles de remorquage (7, 7a, 7b),
- au moins un levier pivotant (8a, 8b, 9a, 9b), par lesquels la selle de support du corps remorqué (5, 5a, 5b) est assemblée de façon pivotante au cadre de structure (3), dans lequel la selle de support du corps remorqué (5, 5a, 5b) peut pivoter de telle façon que, à l'état monté, elle puisse être déplacée conjointement avec le corps volant remorqué (10) d'une première position proche de l'aéronef à une position parallèle à celle-ci et écartée de l'aéronef et inversement, et la position écartée de l'aéronef est déportée vers l'arrière et vers le bas - en considérant les axes de l'aéronef - par rapport à la position proche de l'aéronef,
**caractérisé en ce que** la selle de support du corps remorqué (5, 5a, 5b) n'est maintenue dans la position écartée de l'aéronef que par la pression dynamique appliquée.

2. Lanceur suivant la revendication 1, **caractérisé en ce que** la selle de support du corps remorqué (5, 5a, 5b) avec le corps volant remorqué (10) peut être déplacée de la position écartée de l'aéronef à la position proche de l'aéronef en relevant les câbles de remorquage (7, 7a, 7b).

3. Lanceur suivant l'une quelconque des revendications précédentes, **caractérisé en ce qu'**il comporte précisément deux leviers pivotants parallèles (8a, 8b, 9a, 9b) entre la selle de support du corps remorqué (5, 5a, 5b) et le cadre de structure (3), dont l'un est destiné à reprendre les efforts mécaniques et l'autre sert à l'alignement parallèle de la selle de support du corps remorqué (5, 5a, 5b).

4. Lanceur suivant l'une quelconque des revendications précédentes, **caractérisé en ce que** la position proche de l'aéronef se trouve à l'intérieur et la position écartée de l'aéronef se trouve à l'extérieur d'un boîtier (15) installé sur l'aéronef (20).
